# EUROPEAN PATENT APPLICATION

(11) **EP 4 361 917 A1**
(43) Date of publication of application: **01.05.2024**
(21) Application number: 22203873.9
(22) Date of filing: 26.10.2022
(51) Int. Cl.: G06Q 10/063, G06Q 10/06

(54) **METHOD OF MONITORING AN ASSET IN AN INDUSTRIAL FACILITY**

(71) Applicant: Siemens Aktiengesellschaft, 80333 München (DE)
(72) Inventor: The designation of the inventor has not yet been filed
(74) Representative: Siemens Patent Attorneys

(57) **Abstract**

The current disclosure describes a method of monitoring an asset in an industrial facility. The asset is associated with an asset contract. The method comprises retrieving asset type information associated with the asset from an industrial control system associated with the industrial facility, wherein the asset type information includes one or more parameters associated with the asset; generating an asset monitoring contract using a configuration service, wherein the asset monitoring contract is generated based on the asset contract and the asset type information; and configuring a monitoring service based on the asset monitoring contract for monitoring the asset in accordance to the asset monitoring contract.

## Description

### Background:

The current disclosure relates to asset management in industrial facilities and more particularly, the current disclosure relates to monitoring of assets in accordance with asset contracts. Often, service providers from the financial sector offer a plurality of services in relation to industrial assets. For example, service providers offer asset finance products such as leasing and insurance services, which utilize usage or outcome-based conditions for leasing and/or insuring one or a set of assets (e.g. production machines). In contrast to contracts with fixed rates, such asset contracts with variable rates depend on asset usage information or other metrics associated with the asset, such as 'parts produced' (outcome-based), etc.

### Description:

As mentioned above, the current disclosure relates to monitoring of assets in accordance with asset contracts. Asset contracts are utilized by service providers to offer financial products in relation to assets and such contracts are based on various asset metrics and information. While service providers have the know-how to create and maintain financial contracts, asset contract related tasks such as machine data acquisition and contract compliance monitoring may be difficult for service providers to realize. To address this issue, often asset data is collected manually and turned into human readable documents formats and/or sent via email to the billing department of the financial service provider. This is time consuming and requires significant manual effort. Therefore, there is a need for a method and device which addresses the issue mentioned above.

Accordingly, the current disclosure discloses a method of monitoring an asset in an industrial facility. The asset is associated with an asset contract. The method comprises retrieving asset type information associated with the asset from an industrial control system associated with the industrial facility, the asset type information including one or more parameters associated with the asset, generating an asset monitoring contract using a configuration service, the asset monitoring contract generated based on the asset contract and the asset type information and configuring a monitoring service based on the asset monitoring contract for monitoring the asset in accordance to the asset monitoring contract.

Accordingly, the current disclosure describes an automated manner for monitoring an asset in accordance with an asset contract. The asset contract is used for generating the asset monitoring contract which specifies the particular asset specific variables which have to be monitored. Based on the asset monitoring contract, a monitoring service is configured. The monitoring services utilizes the variable names specified in the monitoring contract and determines the data sources for extracting data in relation to the variables. Accordingly, data related to the asset may be fetched and provided against the asset contract without requiring manual effort.

In an example, the asset monitoring contract is in a predefined mark-up language. Accordingly, the asset monitoring contract may be easily deployed in a plurality of industrial software environments without requiring proprietary plugins. In an example, the monitoring service is configured to fetch asset information in one or more industrial protocols from one or more industrial devices and convert the asset information from the one or more industrial procotols to a data exchange protocol. Similarly, the obtained asset information may be shared easily with other industrial applications associated with service providers without utilizing proprietary file formats.

In an example, the asset monitoring contract includes a contract identifier, wherein the contract identifier is uniquely associated with the corresponding asset contract. Accordingly, each asset monitoring contract is uniquely associated with a corresponding asset contract. Accordingly, management of asset contract and related asset monitoring contracts may be performed easily using the contract identifiers which link these together.

In an example, the monitoring service is configured to fetch asset information from a gateway device associated with the asset. Accordingly, the monitoring service automatically identifies the data sources associated with the asset and fetches asset information associated with the asset. In an example, the monitoring service is configured to abstract the asset information prior to transmitting the asset information to an entity associated with the asset contract. Accordingly, sensitive information associated with the asset variables is retained within the industrial facility and only the information required for the asset contract is transmitted outside the industrial facility to the applications of the service providers.

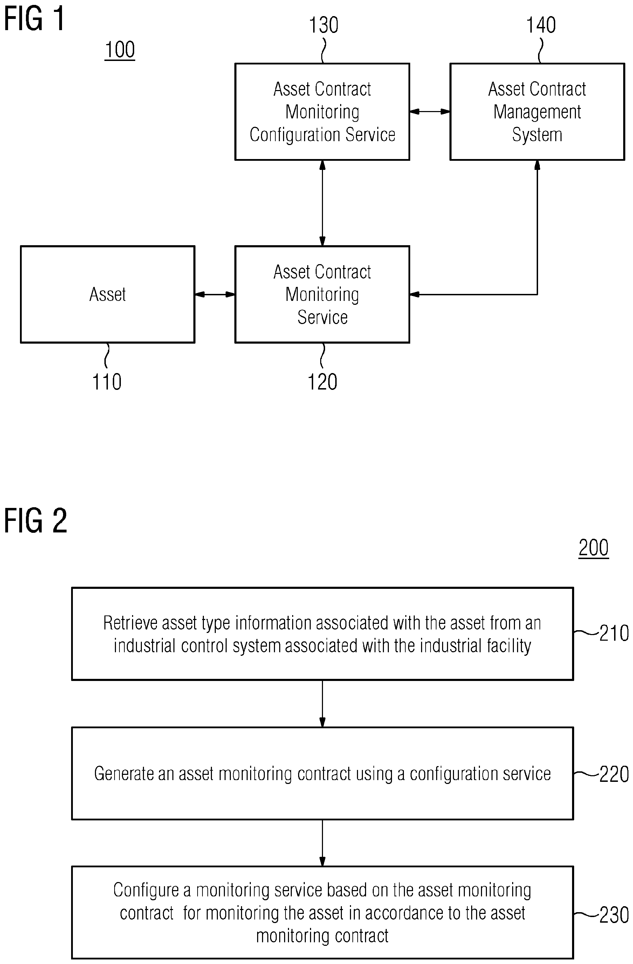

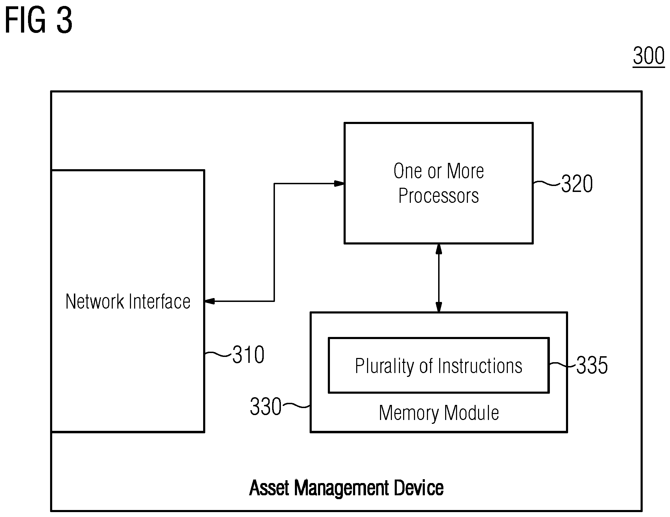

In another aspect, the current disclosure describes an asset management device for monitoring an asset in an industrial facility. The asset management device comprises one or more processors connected to a memory module. The one or more processors are configured to retrieve asset type information associated with the asset from an industrial control system associated with the industrial facility, wherein the asset type information includes one or more parameters associated with the asset; generate an asset monitoring contract using a configuration service, wherein the asset monitoring contract is generated based on the asset contract and the asset type information; and configure a monitoring service based on the asset monitoring contract for monitoring the asset in accordance to the asset monitoring contract. In yet another aspect, the current disclosure describes a non transitory storage medium comprising a plurality of instructions, which when executed on one or more processors, cause the one or more processors to retrieve asset type information associated with the asset from an industrial control system associated with the industrial facility, wherein the asset type information includes one or more parameters associated with the asset; generate an asset monitoring contract using a configuration service, wherein the asset monitoring contract is generated based on the asset contract and the asset type information; and configure a monitoring service based on the asset monitoring contract for monitoring the asset in accordance to the asset monitoring contract. The advantages of the method are applicable to the device and the non transitory storage medium. These aspects are further explained in reference to figures 1-3.
Figure 1 illustrates a section of an industrial facility comprising an asset performing one or more processes;
Figure 2 illustrates a method of monitoring the asset in an industrial facility; and
Figure 3 illustrates an asset management device for monitoring the asset in the industrial facility.

Figure 1 illustrates a section 100 of the industrial facility, comprising an industrial asset 110. The industrial asset 110 is configured to perform one or more industrial processes in the industrial facility. Industrial facility herein refers to any environment where the one or more industrial processes such as manufacturing, refining, smelting, or assembly of equipment, generation, transmission or distribution of electricity, transportation, may take place. This includes process plants, oil refineries, automobile factories, power plants, smart grids, electrical substations, storehouses, etc.

The plurality of industrial process and operations may be carried out using a plurality of industrial devices such as industrial equipment such as pumps, boilers, etc., control devices, field devices, etc. The industrial equipment perform the one or more industrial processes and include the asset 110. The control devices include process controllers, programmable logic controllers, supervisory controllers, automated guided vehicles, robots, operator devices, etc. One or more control devices are connected to a plurality of field devices (not shown in figure) such as actuators and sensor devices for monitoring and controlling various industrial processes by operating the industrial equipment (including the asset 110) in the industrial facility. These field devices can include flowmeters, value actuators, temperature sensors, pressure sensors, etc.

Additionally, the industrial facility may include an operator station for displaying the status of the industrial facility to an operator and for allowing the operator to define KPIs for the control of the industrial processes in the facility. All the industrial devices may be connected to each other via a plant network (realized via wired and wireless technologies). Additionally, the industrial facility includes a plurality of gateway devices which are responsible for connecting the industrial devices and for aggregating data from various field devices. The industrial devices include one or more industrial applications which are capable of processing data from other industrial devices.

The industrial equipment in the industrial facility are associated with corresponding asset contracts. The asset contracts are provided from third party service providers and relate to financial products such as insurance, leasing, etc., provided in relation to the industrial equipment. In accordance with the asset contract, operation information related to the asset is provided to applications belonging to third party service providers. To provide such information, the industrial facility comprises an asset contract monitoring service 120 which is configured to fetch data associated with the asset in accordance with the asset contract and provide the data to the applications belonging to the third-party service providers. The configuration of the asset contract monitoring service 120 is further explained in reference to figure 2.

Figure 2 illustrates a method 200 of monitoring the industrial asset 110 in the industrial facility. As mentioned previously, the asset 110 is associated with an asset contract. The method 200 is realized by the asset contract monitoring configuration service 130. The asset contract monitoring configuration service 130 (also referred to as ACMCS 130) may be realized as a dedicated Software as a service solution or as a contract management system specific plug-in application for enhanced tool integration into the financial service provider's contract management system.

At step 210, the asset contract monitoring configuration service 130 retrieves asset type information associated with the asset from an industrial control system (for example, an asset contract management system 140 or a distributed control system)associated with the industrial facility. The asset type information includes one or more parameters associated with the asset. Examples of the asset type information includes details of machine nameplate associated with the asset, operating hours associated with the asset, parts produced by the asset, etc. Such asset type information may be specified in accordance with industrial standards such as OMAC standards or weihenstephan standards.

In order to determine the asset type information, ACMCS 130 obtains the asset contract from an asset contract management system 140. Then the ACMCS 130 determines the asset type information (i.e., one or more parameters) which are to be monitored in accordance with the asset contract. The ACMCS 130 uses asset type information to support the contract definition with supported metrics.

Asset contracts list their IoT data related metrics (dynamic conditions) in a level of abstraction which the contract partners understand, for example "daily operation less or equal than 8 hours; notified once day at 22:00". Such descriptive text is defined in the asset contract. The ACMCS is configured to determine the asset type information from the descriptive text. Such determination may be performed using text analysis techniques known to the person skilled in the art.

Then at step 220, the asset contract monitoring configuration service 130 generates an asset monitoring contract using a configuration service. The asset monitoring contract is generated based on the asset contract and the asset type information. The asset monitoring contract extends or complements the asset contract by translating the metrics of the asset contract into variables and parameters associated with the asset as understood by the industrial devices. Asset monitoring contract includes generic information of the parameters mentioned in the asset contract and their translation into specific implementation/engineering specific parameters associated with the asset. This is done using the engineering data generated during the engineering for the machine.

The respective metrics (conditions) and variables (tags) are defined in the scope of the asset monitoring contract. The asset monitoring system allows for exporting the list of high-level IoT data conditions for integration into the asset contract. The asset contract monitoring configuration service 130 utilises engineering data associated with the industrial facility to map the metrics mentioned in the asset contract to the variables and the parameters associated with the industrial facility.

By creating the asset monitoring contract, the current disclosure allows for separation of asset contract and asset monitoring contract. This allows for maintaining the IoT data metric definition apart from the more financial and legal concerns of an asset contract. For example, the financial asset contract which needs to be signed by contract partners requires to be created and/or provided in "standard" document form (word, pdf...), while the asset monitoring contract could be modeled in in a predefined mark-up language e.g. as JSON or YAML. Additionally, this ensures that only the abstract data format is exposed to the third party service providers, while specific industrial parameters are exposed only within the industrial environment.

The asset monitoring contract is related to the asset contract by a contract identifier which is defined by the asset contract management system 140 and unique in the scope of the service provider. Additionally, the asset contract may store a digital fingerprint (digitally signed hash) of the related asset monitoring contract to allow future validity check. Additionally, to be able to process asset contracts from multiple service provider, the asset contract monitoring configuration service 130 distinguishes financial service provider by a provider identifier, which is issued by asset contract management system 140, when the financial service provider e.g. onboards onto the asset contract management system 140, which is responsible for issuing unique provider identifier.

At step 230, the asset contract monitoring configuration service 130 configures a monitoring service 120 (also referred to as Asset Contract Monitoring Service) based on the asset monitoring contract for monitoring the asset in accordance to the asset monitoring contract. The ACMCS 130 creates or compiles configuration information for the Asset Contract Monitoring Service 120. The Asset Contract Monitoring Service 120 (ACMS) monitors assets according to the tags and parameters which have been defined in the asset monitoring contract. The ACMS 120 is connected to a plurality of sensors, gateway devices and control devices (also referred to as industrial data sources) for monitoring the asset. In an example, the ACMS 120 is deployed and operated in the cloud as Software as a Service. In another example, the ACMS 120 is dedicated computer or edge system at shopfloor level or production area which is connected to the one or multiple assets for which one or multiple contracts exists which need to be monitored. In another example, the ACMS 120 is deployed inside the asset. In an example, for fetching the asset information from the one or more data sources, the ACMS 120 determines the one or more data sources using an asset proxy object which is indicative of the data sources storing the asset information.

Additionally, the ACMS includes a plurality of protocol adaptors for communicating with the control and field devices using one or more industrial protocols. In addition to the protocol adapters, the ACMS 120 comprises a monitoring module for monitoring IoT data as received from various industrial devices, and a notification module to notify subscribers of contract relevant information. The subscribers refers to the various applications associated with third party service providers associated with the asset contract. The ACMS is configured to send data to the subscribers in accordance with the asset monitoring contract. Prior to sending the data, the ACMS 120 is configured to convert the asset information from one or more industrial protocols to a data exchange protocol (such as JSON or XML). The asset monitoring contract may specify one or more events (fault event, production events) upon the occurrence of which, relevant asset data may be sent to the subscribers.

The ACMS 120 is configured to detect a plurality of events as defined in accordance with the asset monitoring contract. The ACMS 120 monitors the status of the asset, the data values of the asset, etc. For example, the ACMS is configured to monitor status changes of either the asset itself, or defined metrics of the asset, e.g. production state of the asset. The possible states are predefined in the asset type information but could also be defined individually for the contract. In an example, the ACMS monitors change in values of a defined metric of an asset, e.g. the current amount number of parts produced. In another example, the ACMS monitors for contract violation. The ACMS monitors violations of defined rules, e.g. monitoring if the asset is being operated above a defined maximum temperature. Different priorities such as "warning", "alarm", or "critical" can be defined as Contract violation notification classes.

In an example, the ACMS 120 is configured to abstract the asset information prior to transmitting the asset information to an entity associated with the asset contract. Separation on domain model level into financial asset contract and asset monitoring contract allows for information exchange on abstract contract level. Any changes made to the asset contract can be adopted by the "digital twin" of the financial contract. Asset Contract Monitoring Service 120 notifies contract relevant asset states, billing relevant information and contract violations.

It is to be noted that while the above disclosure has explained in relation to the network device, the above method may be realized in another device or a plurality of devices. For example, the method 200 may be implemented in an edge server or an asset management device 300.

Accordingly, the current disclosure describes an asset management device 300 for monitoring an asset in an industrial facility, wherein the asset is associated with an asset contract. The asset management device 300 comprises a network interface 310 for communicating with the industrial devices and one or more processors 320 connected to a memory module 330. The memory module 330 (also referred to as non transitory storage medium 330) comprises a plurality of instructions which when executed on the one or more processors 320, cause the processors 320 to retrieve asset type information associated with the asset from an industrial control system associated with the industrial facility, wherein the asset type information includes one or more parameters associated with the asset; generate an asset monitoring contract using a configuration service, wherein the asset monitoring contract is generated based on the asset contract and the asset type information; and configure a monitoring service based on the asset monitoring contract for monitoring the asset in accordance to the asset monitoring contract.

Accordingly, the present disclosure can take a form of a computer program product comprising program modules accessible from computer-usable or computer-readable medium storing program code for use by or in connection with one or more computers, processing units, or instruction execution system. For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) of monitoring an asset (110) in an industrial facility, wherein the asset is associated with an asset contract, the method (200) comprising:
a. retrieving (210) asset type information associated with the asset (110) from an industrial control system associated with the industrial facility, wherein the asset type information includes one or more parameters associated with the asset (110);
b. generating (220) an asset monitoring contract using a configuration service (130), wherein the asset monitoring contract is generated based on the asset contract and the asset type information; and
c. configuring a monitoring service (120) based on the asset monitoring contract for monitoring the asset (110) in accordance to the asset monitoring contract.

2. The method (200) as claimed in claim 1, wherein the asset monitoring contract is in a predefined mark up language.

3. The method (200) as claimed in claim 1, wherein the monitoring service (130) is configured to fetch asset information in one or more industrial protocols from one or more industrial devices and convert the asset information from the one or more industrial protocols to a data exchange protocol.

4. The method (200) as claimed in claim 1, wherein the asset monitoring contract includes a contract identifier, wherein the contract identifier is uniquely associated with the corresponding asset contract.

5. The method (200) as claimed in claim 1, wherein the monitoring service (130) is configured to fetch asset information from a gateway device associated with the asset (110).

6. The method (200) as claimed in claim 1, wherein the monitoring service (130) is configured to abstract the asset information prior to transmitting the asset information to an entity associated with the asset contract.

7. An asset management device (300) for monitoring an asset (110) in an industrial facility, wherein the asset (110) is associated with an asset contract, the asset management device (300) comprising:
a. one or more processors (320) connected to a memory module (330), the one or more processors (320) configured to:
i. retrieve asset type information associated with the asset (110) from an industrial control system associated with the industrial facility, wherein the asset type information includes one or more parameters associated with the asset (110);
ii. generate an asset monitoring contract using a configuration service (130), wherein the asset monitoring contract is generated based on the asset contract and the asset type information; and
iii. configure a monitoring service (120) based on the asset monitoring contract for monitoring the asset (110) in accordance to the asset monitoring contract.

8. A non transitory storage medium (330) comprising a plurality of instructions, which when executed on one or more processors (320), cause the one or more processors (320) to:
a. retrieve asset type information associated with the asset (110) from an industrial control system associated with the industrial facility, wherein the asset type information includes one or more parameters associated with the asset (110);
b. generate an asset monitoring contract using a configuration service (130), wherein the asset monitoring contract is generated based on the asset contract and the asset type information; and
c. configure a monitoring service (120) based on the asset monitoring contract for monitoring the asset (110) in accordance to the asset monitoring contract.
